# EUROPEAN PATENT SPECIFICATION

(11) **EP 0 842 805 B1**
(45) Date of publication and mention of the grant of the patent: **05.03.2003**
(21) Application number: 97830489.7
(22) Date of filing: 02.10.1997
(51) Int. Cl.: B60K 37/00, B60H 1/00

(54) **A motor-vehicle dashboard**
Armaturenbrett für Motorfahrzeuge
Tableau de bord pour voitures à moteur

(30) Priority: 18.11.1996 IT TO960924
(43) Date of publication of application: 20.05.1998
(73) Proprietor: DENSO THERMAL SYSTEMS S.p.A., 10046 Poirino (Torino) (IT)
(72) Inventor: Molari, Aurelio, c/o Magneti Marelli Spa, 10078 Venaria Reale (Torino) (IT); Scavino, Gianni, c/o Magneti Marelli Spa, 10078 Venaria Reale (Torino) (IT)
(74) Representative: Notaro, Giancarlo

(56) References cited:
- EP-A- 0 047 858
- FR-A- 2 653 087
- GB-A- 2 110 616

## Description

The present invention relates to a motor-vehicle of the type comprising a body, an auxiliary frame including a cross-member provided at its ends with means for connection to said body, a dashboard mounted on said auxiliary frame so as to form therewith a dashboard unit which can be pre-assembled, and an auxiliary unit such as an air-conditioning unit or heating unit having a housing fixed to said dashboard unit and support column means for said dashboard unit extending between the cross-member and the floor of the body. The document EP-A-0 047 858 shows the preamble of claim 1.

In motor-vehicles of the above indicated type, said support column means are constituted by a sheet metal element extending vertically between the central portion of the cross-member and the floor, which is fixed both to said cross-member and said floor, so as to provide a central support for the dashboard unit and avoid deformations and vibrations of the latter.

The object of the present invention is that of simplifying said known solution, while keeping its advantages.

In view of achieving this object, the invention provides a motor-vehicle arrangement according to pending claim 1.

Said connecting means comprises a U-shaped bracket having a plurality of holes on its side walls, each able to receive a respective fixing bolt which engages also a respective vertical slot on said housing, said U-shaped bracket further having at least one hole at its base adapted to receive a respective fixing bolt which engages also a hole formed in the body floor, said hole on the base of the U-shaped bracket having a diameter which is substantially greater than the diameter of said floor fixing bolt. Due to these features it is ensured that, when the dashboard unit is mounted on the body after that it has been assembled off-line, it is always possible to carry out the requested connection even if, because of the manufacture tolerances, the relative position between the housing of the auxiliary unit and the floor is not always the same. Furthermore, the provision of said U-shaped bracket makes the assembling and disassembling operations easier, since the absence of this bracket creates a gap between the lower part of said housing and the floor which renders the aforesaid operations easier.

A preferred embodiment of the invention will be described in the following, with reference to the annexed drawings, given purely by way of non limiting example, in which:
figure 1 shows a diagrammatic view of the dashboard unit mounted within the passenger compartment of a motor-vehicle,
figure 2 shows an exploded perspective view, at an enlarged scale, of the dashboard unit of figure 1,
figure 3 is a cross-sectional view taken along line 3-III of figure 1,
figure 4 is a view of the unit of figure 1, and
figure 5 is a perspective view of a detail of the inner surface of the body side panel which is used for connecting the dashboard unit.

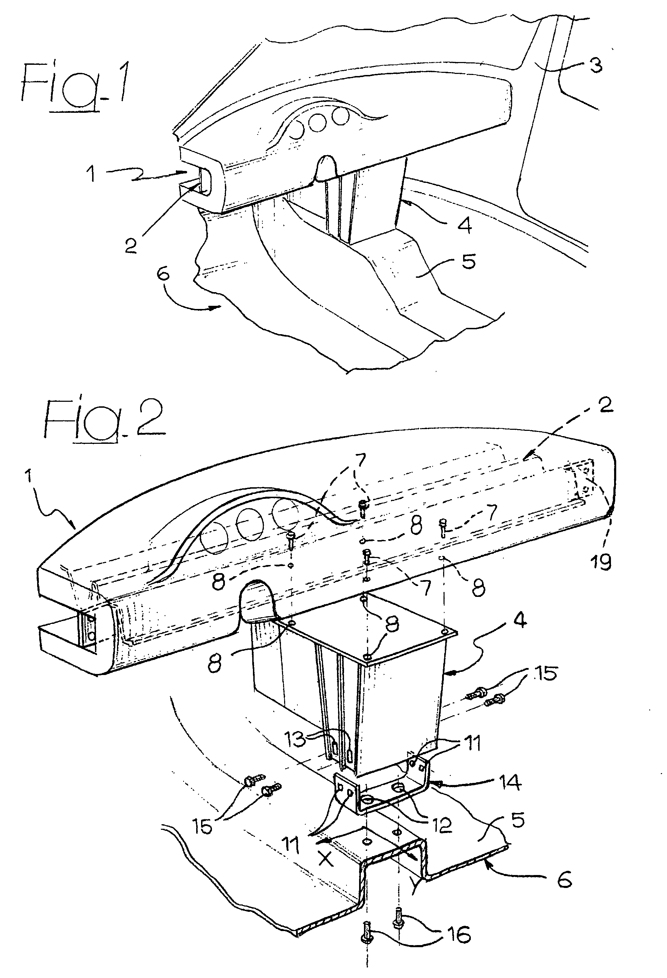

According to a preferred embodiment of the present invention, and with reference to figure 1, a dashboard unit 1 is mounted on an auxiliary frame 2, constituted by a cross-member, e.g. of sheet metal or plastic material, which on its turn is fixed at its ends to the two side panels 3 of the motor-vehicle (one of the side panels has been omitted in the drawing in order to render the latter more understandable).

The frame 2 of the dashboard unit 1 is further centrally supported by the housing 4 of an auxiliary unit, such as an air-conditioning unit or a heating unit, which on its turn is supported by the floor 5 of the body 6 of the motor-vehicle.

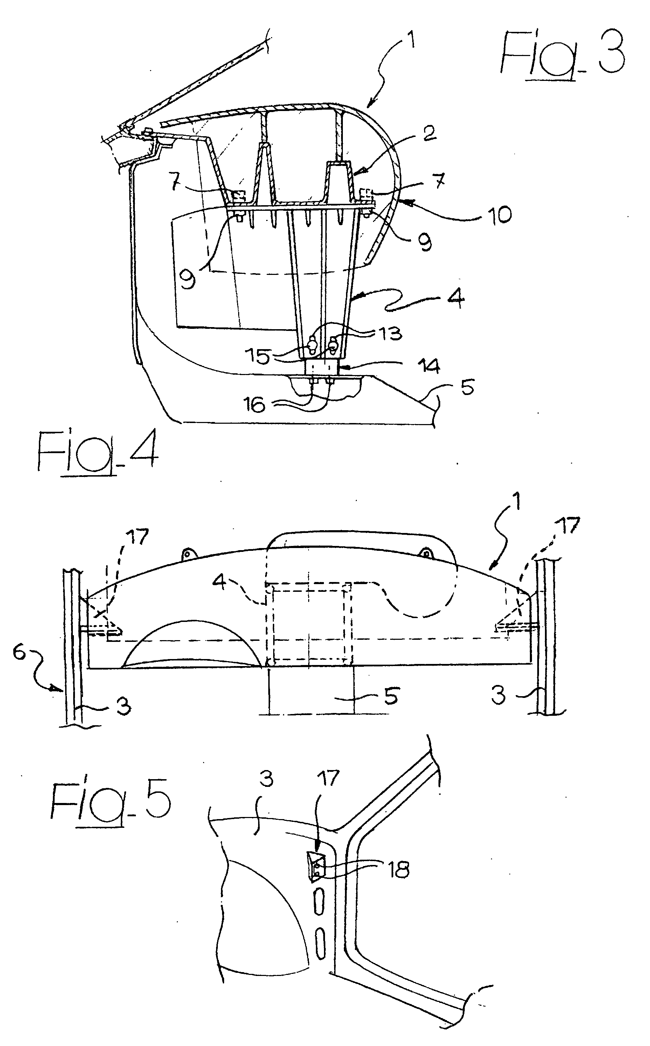

Furthermore, the housing 4 of the auxiliary unit is fixed to the auxiliary frame 2 (figures 2 and 4) by four screws 7 respectively engaging the holes 8 formed both in the auxiliary frame 2 and in the upper wall of housing 4 and clamped by respective nuts 9. As shown in figure 3, the dashboard unit 1 further has an outer ornamental element 10 fixed to the auxiliary frame 2 from which the housing 4 projects downwardly.

The housing 4 is fixed at the bottom to the floor of body 6 (see figures 2 and 3) by a U-shaped bracket 14, having two pairs of holes 11, on its two side wings and two holes 12 on its base. The housing 4 has four holes 13 which are vertically elongated on its side walls, two holes being provided on each side wall, said holes being arranged so as to face the respective holes 11 and be engaged there alone by the respective bolts 15. In this way, the U-shaped bracket 14 is fixed to housing 4 so as to be adjustable in the vertical direction.

The holes 12 enable the U-shaped bracket 14 to be fixed to the floor 5 by respective bolts 16.

Also in this case the connection is adjustable since the diameter of holes 12 is greater than the diameter of bolts 16 thus providing the bracket, and hence everything which is connected thereto, a certain play in the direction of arrows x,y shown in figure 2.

This type of adjustable connection of housing 4 to floor 5 by the U-shaped bracket 14 enables the final assembly of the dashboard unit to the floor, not withstanding the possible variations in position, resulting from the tolerances of manufacture.

As already indicated, the provision of said U-shaped bracket greatly facilitates the assembling and disassembling operations, since in the absence of this bracket a free gap is formed between the housing 4 and the floor 5 which renders both the mounting of the whole dashboard unit within the compartment, and the disassembling of the auxiliary unit, easier.

According to the preferred embodiment of the present invention and as shown in figures 2, 4 and 5 there are further provided, on side panels 3 of body 6, brackets 17, having holes 18, which enable the connection of dashboard unit 1, through element 19 of the auxiliary frame 2, to the body 6 of the motor-vehicle in conventional way.

According to a technique known per se, the whole dashboard unit is assembled on frame 2 away from the motor-vehicle production line and is then mounted by a single operation within the passenger compartment. The auxiliary unit can then be connected at its bottom to the floor by bracket 14, so that, in the assembled structure, it fulfils also the function of a support column for the central portion of the cross-member constituting said auxiliary frame 2. The same advantages of the above described known solution making us of an auxiliary frame including a column element are achieved, while eliminating this latter component.

## Claims

1. Motor-vehicle arrangement comprising a body (6), an auxiliary frame (2) including a cross-member provided at its ends with means (19) for connection to said body (6), a dashboard (10) mounted on said auxiliary frame (2) so as to form therewith a dashboard unit (1) which can be pre-assembled, and an auxiliary unit such as an air-conditioning unit or heating unit having a housing (4) fixed to said dashboard unit (1) and support column means for said dashboard unit (1) extending between said cross-member (2) and the floor (5) of said body (6), whereby said support column means are integral part of the housing (4) of said auxiliary unit, said motor-vehicle arrangement being
**characterized in that** said housing (4) comprises means (11-16) for connection to the floor (5) of said body (6), and **in that** said connecting means (11-16) comprises a U-shaped bracket (14) having a plurality of holes (11) on its side walls, each adapted to receive a respective fixing bolt (15) which engages also a respective vertical slot (13) on said housing (4), said U-shaped bracket (14) further having at least one hole (12) on its base, adapted to receive a respective fixing bolt (16) which engages also a hole formed in the floor (5) of the body (6).

2. Motor-vehicle according to claim 2,
**characterized in that** said connecting means (11-16) are adapted to allow the relative position of said housing (4) and said body (6) to be adjusted.

3. Motor-vehicle arrangement according claims 1 or 2,
**characterized in that** said hole (12) on the base of the U-shaped bracket (14) has a diameter substantially greater than the diameter of said bolt (16) for connection to the floor (5), and **in that** said vertical slot (13) on said housing (4) and said hole on the base of the U-shaped bracket (14) provide said variation of relative position.

## Patentansprüche

1. Motorfahrzeuganordnung, die eine Karosserie (6), einen Hilfsrahmen (2), der ein Querelement enthält, das an seinen Enden mit Einrichtungen (19) zur Verbindung mit der Karosserie (6) versehen ist, ein Armaturenbrett (10), das an dem Hilfsrahmen (2) angebracht ist, um damit eine Armaturenbretteinheit (1) zu bilden, die vormontiert werden kann, sowie eine Hilfseinheit, wie beispielsweise eine Klimatisierungseinheit oder eine Heizeinheit, mit einem Gehäuse (4), das an der Armaturenbretteinheit (1) befestigt ist, und einer Stützsäuleneinrichtung für die Armaturenbretteinheit (1), die sich zwischen dem Querelement (2) und dem Boden (5) der Karosserie (6) erstreckt, umfasst, wobei die Stützsäuleneinrichtung einen integralen Teil des Gehäuses (4) der Hilfseinheit bildet und die Motorfahrzeuganordnung **dadurch gekennzeichnet ist, dass** das Gehäuse (4) eine Einrichtung (11-16) zur Verbindung mit dem Boden (5) der Karosserie (6) umfasst, und dadurch, dass die Verbindungseinrichtung (11-16) einen U-förmigen Halter (14) mit einer Vielzahl von Löchern (11) an seinen Seitenwänden umfasst, die jeweils eine entsprechende Befestigungsschraube (15) aufnehmen, die des Weiteren in einen entsprechenden vertikalen Schlitz (13) an dem Gehäuse (4) eingreift, wobei der U-förmige Halter (14) des Weiteren wenigstens ein Loch (12) an seinem Boden aufweist, das eine entsprechende Befestigungsschraube (16) aufnimmt, die auch in ein Loch eingreift, das in dem Boden (5) der Karosserie (6) ausgebildet ist.

2. Motorfahrzeuganordnung nach Anspruch 1, **dadurch gekennzeichnet, dass** die Verbindungseinrichtung (11-16) es ermöglicht, die relative Position des Gehäuses (4) und der Karosserie (6) zu verstellen.

3. Motorfahrzeuganordnung nach Anspruch 1 oder 2, **dadurch gekennzeichnet, dass** das Loch (12) am Boden des U-förmigen Halters (14) einen Durchmesser hat, der erheblich größer ist als der Durchmesser der Schraube (16) zur Verbindung mit dem Boden (5), und dass der vertikale Schlitz (13) an dem Gehäuse (4) und das Loch am Boden des U-förmigen Halters (14) die Veränderung der relativen Position ermöglichen.

## Revendications

1. Agencement dans un véhicule à moteur comprenant un corps (6), un châssis auxiliaire (2) incluant une traverse dotée à ses extrémités de moyens (19) pour la connexion audit corps (6), un tableau de bord (10) monté sur ledit châssis auxiliaire (2) de manière à former avec celui-ci une unité de tableau de bord (1) qui peut être préassemblée, et une unité auxiliaire, comme une unité de conditionnement d'air ou une unité de chauffage, ayant un boîtier (4) fixé à ladite unité de tableau de bord (1) et des moyens formant colonne de support pour ladite unité de tableau de bord (1) qui s'étendent entre ladite traverse (2) et le plancher (5) dudit corps (6), dans lequel lesdits moyens formant colonne de support sont partie intégrante du boîtier (4) de ladite unité auxiliaire, ledit agencement dans un véhicule à moteur étant **caractérisé en ce que** ledit boîtier (4) comprend des moyens (11-16) pour la connexion au plancher (5) dudit corps (6), et **en ce que** lesdits moyens de connexion (11-16) comprennent une platine en forme de U (14) ayant une pluralité de trous (11) sur ses parois latérales, chacun adapté à recevoir un boulon de fixation respectif (15) qui engage également une fente verticale respective (13) sur ledit boîtier (4), ladite platine en forme de U (14) ayant en outre au moins un trou (12) sur sa base, adapté à recevoir un boulon de fixation respectif (16) qui engage également un trou formé dans le plancher (5) du corps (6).

2. Agencement dans un véhicule à moteur selon la revendication 1, **caractérisé en ce que** lesdits moyens de connexion (11-16) sont adaptés pour permettre d'ajuster la position relative dudit boîtier (4) et dudit corps (6).

3. Agencement dans un véhicule à moteur selon l'une ou l'autre des revendications 1 et 2, **caractérisé en ce que** ledit trou (12) sur la base de la platine en forme de U (14) a un diamètre sensiblement plus important que le diamètre dudit boulon (16) pour la connexion au plancher (5), et **en ce que** ladite fente verticale (13) sur ledit boîtier (4) et ledit trou sur la base de la platine en forme de U (14) procurent ladite variation de position relative.
